Europäisches Patentamt

European Patent Office

Office européen des brevets

(19)

(11) Publication number: **0 092 441**
A1

(12) # EUROPEAN PATENT APPLICATION

(21) Application number: 83302254.4

(22) Date of filing: 20.04.83

(51) Int. Cl.³: **G 02 B 5/16**, G 02 B 7/26

(30) Priority: 20.04.82 GB 8211331

(43) Date of publication of application: 26.10.83
Bulletin 83/43

(84) Designated Contracting States: **AT BE CH DE FR GB IT LI NL SE**

(71) Applicant: **RAYCHEM PONTOISE S.A., 2-4 Avenue de l'Eguillette Z.A. du Vert Galant, F-95310 Saint-Ouen l'Aumone (FR)**

(72) Inventor: **Sibille, Jean-Jacques, 33 Avenue De Gaulle, F-95310 St. Ouen Aumone (FR)**
Inventor: **Watine, Didier Jacques M.M.J., 1 Ter Avenue Arago, F-78600 Maisons Laffitte (FR)**

(74) Representative: **Benson, John Everett et al, Raychem Limited Morley House 26 Holborn Viaduct, London EC1 (GB)**

(54) **Fibre optic cables.**

(57) An assembly (4) for terminating a fibre optic cable (2) that has the optical fibres (10) located in external channels (12) of a cable core member (8) has a plurality of polymeric sleeves (16) for fitting over the individual exposed optical fibres (10) to protect them up to the cut-back end of the cable (2). The sleeved fibres are provided as a snap fit into longitudinal channels (26) in the outer surface of a cylindrical support member (18) that is mounted on the end of the cable (2). A heat-recoverable polymeric sleeve (24) is recovered over the end of the cable (2) and the support member (18), and is provided with meltable inserts (20, 22), whereby the cable end is enviromentally sealed.

ACTORUM AG

## Fibre Optic Cables

## Description

This invention relates to fibre optic cables and especially to an assembly and a method for terminating a fibre-optic cable.

In this context, "terminating" is to be understood as including not only the actual termination of a fibre-optic cable where the signal is removed from the fibre-optic carrying medium, but also termination of one cable in preparation, for example, for splicing it to another cable or making a branch-off of one or more parts of the signal carried by the one cable into one or more other cables.

Generally, fibre-optic cables comprise a bundle, that is to say a plurality, of optical fibres supported, for example, on a rigid inner core, and environmentally protected by an outer polymeric sheath. To terminate this type of cable it is generally necessary to protect each of the optical fibres of the bundle separately at the termination.

One aspect of the present invention provides an assembly suitable for terminating a fibre-optic cable having a plurality of optical fibres extending from an end thereof, the assembly comprising a plurality of polymeric sleeves for positioning around respective individual optical fibres, and a support member having a plurality of channels for receiving and locating sleeved portions of respective optical fibres within the channels, the support member being arranged for

0092441

mounting at the end of the cable to support the sleeved optical fibres where they extend from the cable.

Preferably the channels are open-sided, and preferably form part of the outer surface of the support member. This arrangement allows the sleeved portions of the optical fibres to be inserted into the channels in a direction radially of the support member.

Preferably the polymeric sleeves are arranged to be a snap fit in respective ones of the channels. Thus, advantageously the polymeric sleeves may be squeezed into the channels and then retained therein by the shape of the channels. To effect this snap fit, the width of the channel opening is arranged, at least along part of the length of the channel, to be slightly smaller than the outer diameter of the polymeric sleeve. It will be appreciated that the snap fit greatly facilitates handling and installation of the termination assembly since once each polymeric sleeve has been inserted in a channel it is retained in the correct position.

The support member may be marked for identification. This facilates ordering of the fibres in the member. Furthermore, where the arrangement is such that the fibres may be inserted into the channels radially of the support member, in the event that a fibre is wrongly positioned, it can readily be removed and correctly reinserted.

Preferably, the support member is arranged such that at least at the transition from the cable to the support member the optical fibres undergo substantially no change in direction. In order to achieve this, the support member can be shaped to be compatible with the cable end. For example, to terminate a cable having an internal carrier member of constant cross-section the cross-section of the support member is preferably shaped to be compatible with the cross-sectional shape of the cable carrier member. The expression "substantially no change in direction" as used herein is intended to mean that each optical fibre continues when it leaves the cable in substantially the same direction that it extends within the cable. In a fibre optic cable the fibres are usually arranged to extend in the general direction of a helix of very large pitch since with this arrangement bending of the whole cable results in minimum mechanical strain of the individual fibres. To terminate such a cable the support member is advantageously arranged such that the fibres continue in a substantially straight path where they leave the cable end, that is to say in substantially the same direction as the helix of very large pitch. This is advantageous since if an appreciable change in direction is introduced, for example by way of a step or kink, in the path of an optical fibre the performance of the cable is reduced.

In one embodiment the support member is substantially cylindrical, the channels being disposed substantially equidistantly from the axis of the support member, and preferably extending substantially parallel to the axis of the support member.

A cylindrical support member as described above may be used, for example, to terminate a fibre-optic cable having a plurality of fibres extending along channels of an inner substantially cylindrical carrier member. In this example, the cylindrical support member is preferably arranged such that the channels in the support member are registrable with the channels of the cable such that when the polymeric sleeves are received in the support member channels the axes of the sleeves coincide with the axes of the optical fibres where the fibres extend from the cable. Thus the optical fibres undergo substantially no change in direction at the transition from the cable end to the support member.

The polymeric sleeves may be received in the support member alone, abutting the end of the carrier member of the cable. Preferably the polymeric sleeves are arranged, in use, to extend a short distance into the channels of the cable, and most preferably to extend along the carrier member of the cable up to the end of the outer cable sheath where it has been cut back to expose the optical fibres. This arrangement causes the path of the optical fibres in the cable to deviate slightly, which can result in a small attenuation of the signal, say of up to about 0.1 dB. Such an attenuation is, however, acceptable for most applications and the arrangement does have the advantage that it makes it easier to align and maintain in alignment the channels of the cable with those of the support member.

Alternatively, the ends of the polymeric sleeves may be cut at an angle such that the sleeves extend into the cable channels only on that side of the optical fibres distant from the base of the cable channels. This arrangement does not introduce a deviation in the path of the optical fibres yet still facilitates alignment of the cable and support member channels.

It is especially preferred to include a further, outer, polymeric sleeve in the assembly, arranged so as to extend, in use, over at least the transition between

0092441

the cable end and the support member, environmentally to protect the end of the cable. The termination is preferably hermetically sealed, and the further polymeric sleeve advantageously prevents or at least minimises any leak path at the cable end, between the polymeric cable sheath and the plurality of sleeves mounted individually on the optical fibres. Preferably the further polymeric sleeve extends along substantially the entire length of the support member at one end, and a considerable distance over the cable sheath at its other end. It will be appreciated that it is possible conveniently to increase the leak path by increasing the length of the support member and the overlying further polymeric sleeve, or by increasing the length of overlap over the cable sheath or both. Furthermore, since the polymeric cable sheath is commonly in the form of a helically-wrapped tape, the further polymeric sleeve has the additional advantage that it prevents or at least minimises unwrapping of the tape.

The further polymeric sleeve is preferably heat-shrinkable. A heat shrinkable sleeve is an article the dimensional configuration of which may be made substantially to decrease when subjected to heat treatment. Usually these sleeves shrink, on heating, towards an original shape from which they have previously been deformed but the term "heat-shrinkable", as used herein, also includes an article which, on heating, adopts a new configuration, even if it has not been previously deformed.

Heat shrinkable sleeves made from a polymeric material exhibiting the property of elastic or plastic memory are described, for example, in U.S. Patents 2,027,962; 3,086,242 and 3,597,372. As is made clear in, for example, U.S. Patent 2,027,962, the original

0092441

dimensionally heat-stable form may be a transient form in a continuous process in which, for example, an extruded tube is expanded, whilst hot, to a dimensionally heat-unstable form but, in other applications, a preformed dimensionally heat stable article is deformed to a dimensionally heat unstable form in a separate stage.

It will be appreciated that heat applied to shrink the outer sleeve could have an adverse effect on the optical fibres, but this is avoided, or at least minimised, in the present invention due to the presence of the polymeric sleeves, mounted on the individual fibres, acting as a thermal barrier.

It is preferable that where heat is to be applied to the assembly, for example by applying heat to an outer sleeve where this is provided and where it is heat-recoverable, the materials of the components of the assembly be readily able to withstand the temperatures to which they are subjected. Thus, the recovery temperature of an outer heat-recoverable sleeve should be less than the temperature at which inner components of the assembly soften to any appreciable extent.

The heat shrinkable sleeve is preferably made from a cross-linked polymeric material. Suitable materials are cross-linked polyethylene or cross-linked Kynar (Trade Mark), but any other polymeric material that is capable of shrinking around, and sealing to, the support member could be used instead.

The polymeric sleeves individually surrounding the optical fibres preferably comprise a cross-linked polymeric material that does not melt appreciably or lose its strength on application of the shrinkage heat. Cross-linked Kynar is an especially preferred material.

0092441

The material of the support member is selected to be compatible with that of the polymeric sleeves and of the further polymeric sleeve, not only in its thermal properties as mentioned above, but also such that the support member and sleeve may be efficiently sealed together. To these ends the support member is preferably made from an uncross-linked polymeric material such that the heat applied to shrink the further polymeric sleeve also causes some softening of the outer surface of the support member, and thereby seals the support member to the further polymeric sleeve. The material of the support member must also be suitably rigid to act as a support for the optical fibres and must maintain this support on shrinkage of the further polymeric sleeve. An especially suitable material for the support member is uncross-linked Kynar.

In addition to the materials mentioned above, particularly advantageous combinations are polyethylene, especially high density polyethylene, for the sleeves that are positioned over the optical fibres, and polypropylene, or less advantageously polyethylene, for the support member, together with polyethylene, or less advanteously ethylene-vinyl-acetate (EVA), for the outer heat-recoverable sleeve, when this is employed.

The further polymeric sleeve is preferably sealed to the cable and to the support member by a sealing material to provide the environmental protection. The sealing material may, for example, be in the form of two sealing rings arranged as inserts on respective ends of the further polymeric sleeve. Alternatively the sealing material may be provided as a coating on the internal surface of the further polymeric sleeve.

The sealing material may comprise any material that can flow to seal together the further polymeric sleeve, the sleeves individually surrounding the optical fibres and the support member. The melting temperature of the sealing material, as well as being less than the recovery temperature of the further, outer polymeric sleeve, should be less than the melting temperature of the optical fibre sleeves and of the support member. Advantageously an uncross-linked polymeric material that flows on application of the heat applied to shrink the further polymeric sleeve is used. Uncross-linked Nylon (Trade Mark) is especially preferred. However, other suitable materials include polyester, EVA, acrylate, and polyethylene or a copolymer thereof that has been modified to provide the required properties for it to adhere to the optical fibre sleevings and the support member.

Preferably the outer surface of the support member contains a depression extending around the circumference of the support member. The depression is arranged to assist retention of the further polymeric sleeve on the support member. In particular, when sealing material is provided the depression is conveniently arranged to constrain its flow and to localise it within the sleeve. This enhances sealing and hence the environmental protection and also minimises axial movement of the further polymeric sleeve relative to the support member. If the sealing material is provided in the form of two rings as inserts on the further polymeric sleeve, the further polymeric sleeve is preferably positioned such that one of the rings is located around the depression in the support member so that when the material flows it is directed into the depression. To facilitate location of the ring, the further polymeric sleeve is advantageously made from a transparent material.

0092441

It will be appreciated that the support member, polymeric sleeves and further polymeric sleeve (when included) may all be of such a shape that they may be extruded, this being a convenient and economical form of manufacture. Furthermore, the further polymeric sleeve (when included) is conveniently of a simple shape, for example a tubular sleeve having a wall of uniform thickness, so that it may readily be expanded to render it heat-recoverable.

Another aspect of the present invention provides a fibre-optic cable having a plurality of optical fibres extending from an end thereof terminated with an assembly as described above.

A further aspect of the present invention provides a method of terminating a fibre optic cable having a plurality of optical fibres extending from an end thereof, the method comprising positioning a plurality of polymeric sleeves around respective ones of the optical fibres, mounting a support member at the end of the cable, the support member having a plurality of channels and being arranged such that the channels receive and locate sleeved portions of respective ones of the optical fibres and such that the sleeved optical fibres are supported where they extend from the cable. This arrangement has the advantage that it may conveniently be arranged such that while the fibres are being inserted in the support they are already sleeved and thus protected against any mechanical abuse, that may result.

A still further aspect of the invention provides a method of terminating a fibre optic cable having a plurality of optical fibres extending from the end thereof, using an assembly as described above.

An assembly and method suitable for terminating a fibre optic cable in, each accordance with the present invention, will now be described, by way of example, with reference to the accompanying drawings, in which:-

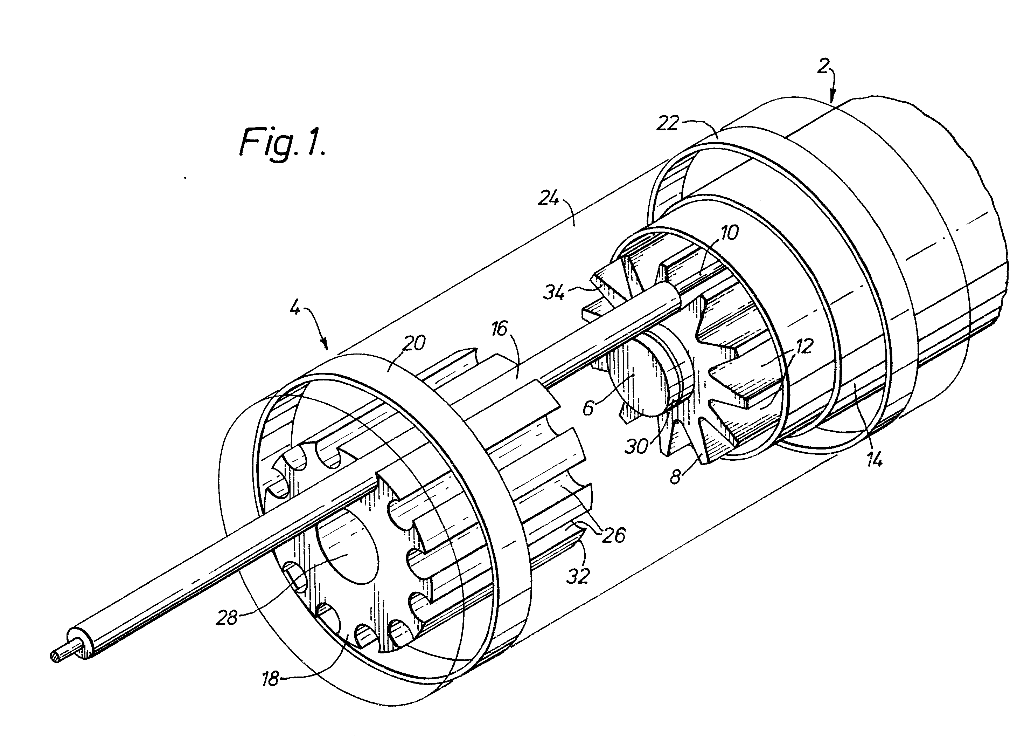

Figure 1 is a perspective view of the assembly partially installed at the end of a fibre optic cable;

Figure 2 shows in detail a portion of the assembly of Figure 1; and

Figure 3 shows an alternative arrangement of the polymeric sleeves of the assembly.

Referring to the drawings, a fibre optic cable 2 is terminated by an assembly 4.

The fibre optic cable 2 comprises an inner rigid core 6 which provides the rigidity of the cable, and, surrounding the core 6, an elongate carrier member 8 for supporting the optical fibres 10 of the cable. The carrier member 8 is generally star-shaped in cross-section with elongate channels 12 extending therealong between the "points" of the star axially of the cable along the outer surface of the member 8.

The carrier member 8 maintains the position of the optical fibres 10 within the cable, with each fibre 10 extending along and being maintained in position in a respective one of channels 12. For clarity in the drawings, only one optical fibre 10 has been shown, but it will be appreciated that one fibre may be received in each of channels 12 such that all the channels 12 are filled, or as many fibres may be provided as required. An outer polyvinylchloride tape 14 is helically wrapped around the carrier member 8 and the fibres 10 to provide an outer protective jacket of the cable 2.

The assembly 4 for terminating the cable 2 comprises a plurality of cross-linked Kynar polymeric sleeves 16, a cylindrical cross-linked Kynar polymeric support member or barrel 18, fusible sealing rings 20,22 made from uncross-linked Nylon (Trade Mark) and an outer cross-linked heat-shrinkable polymeric sleeve 24. The sealing rings 20,22 may conveniently be provided as inserts retained on the sleeve 24. Channels 26 extend along and form part of the outer surface of the barrel 18, and the size and shape of each of the sleeves 16 is such that each sleeve 16 may be positioned around a respective one of the fibres 10, and the ensleeved fibres received and located as a snap fit in respective ones of the channels 26. To this end, the width of the opening of channels 26 is slightly smaller than the outer diameter of sleeves 16. The barrel 18 has a hollow passage 28 extending along its entire length to engage with the end of the cable core 6.

To prepare the cable 2 for termination, the end of the cable, including the jacket 14, is cut-back such that the optical fibres 10 project from the end and such that a portion of the core 6 projects as a boss 30 a short distance from the end of the carrier member 8.

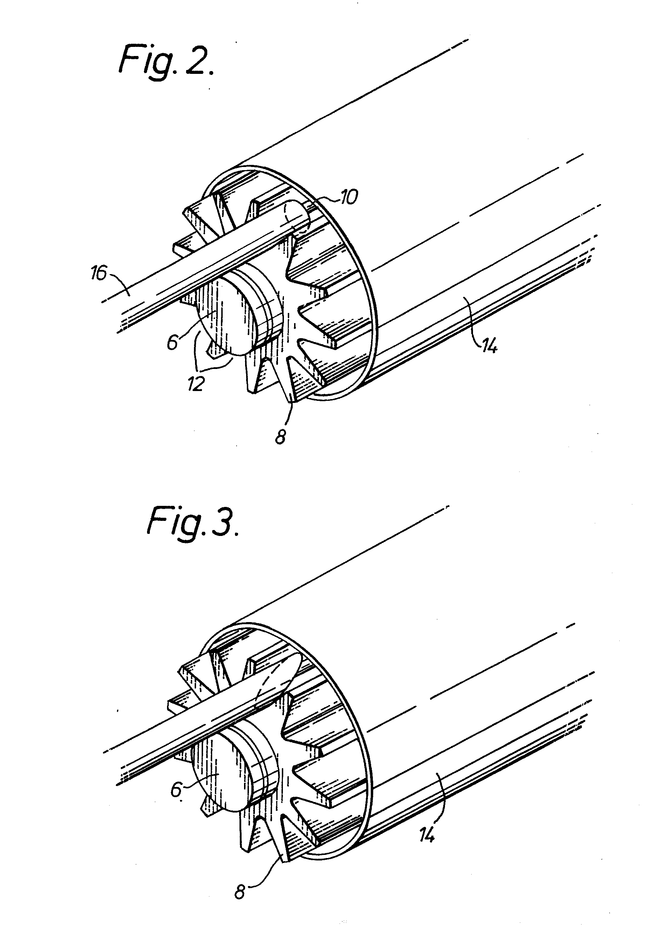

The assembly 4 is installed on the prepared cable 2 as follows. The sleeves 16 are positioned around respective ones of the fibres 10 and the ensleeved fibres are then inserted in turn in a snap fit into respective ones of the channels 26 in the barrel 18. The ends of the sleeves 16 are urged into the channels 12 up to the cut-back end of the cable jacket 14 (Figure 2). The end face 32 of the barrel 18 is brought into abutment with the end face 34 of the cable carrier member 8, the passage 28 in the barrel 18 engaging the projecting boss 30 of the cable core 6. The engagement is a friction fit thereby firmly securing the barrel 18 and cable 2 together.

As shown in Figure 2, the polymeric sleeves 16 extend a short distance into the channels 12 of the cable 2. This makes it easy to align the cable channels 12 with the barrel channels 26 but may introduce a slight deviation in the path of fibres 10 which results in a slight attenuation of the signal. To minimise the deviation and resultant attenuation while maintaining the ease of alignment of the cable and barrel channels 12 and 26, the ends of the polymeric sleeves may be cut at an angle as shown in Figure 4 such that they extend into the cable channels 12 only on that side of the optical fibres 10 distant from the base of channels 12.

The heat-shrinkable sleeve 24 is then installed over the barrel 18 and the end of cable 2 environmentally to protect the cable end, especially the optical fibres 10 adjacent the cable end. The sleeve 24 is shrunk into conformity with the underlying substrate by the application of heat, protection for the optical fibres 10 being provided by the sleeves 16.

The sealing rings 20,22 are provided towards respective ends of the sleeve 24. The rings 20,22 melt and flow on application of the heat applied to shrink the sleeve 24. The ring 20 flows to seal the sleeve 24 to the barrel 18 and to the sleeves 16 and also to fill any spaces between the sleeves 16 and the channels 26, thereby avoiding any leak path between the sleeve 24 and barrel 18. Ring 22 flows to seal the sleeve 24 to the helically wrapped outer tape 14 of cable 2, thereby preventing any leak path between the sleeve 24 and the end of cable 2. Ring 22 also flows to secure the sleeve 24 and cable 2 firmly together and to secure the barrel 18 permanently to cable 2. Flowed ring 22 also prevents the helically wrapped tape 14 of cable 2 unwrapping. Thus there is no leak path between the sleeve 24 and the barrel 18 or the cable outer tape 14, and the optical fibres 10 are efficiently environmentally sealed.

The barrel 18 is made from an uncross-linked polymeric material and the heat applied to shrink sleeve 24 is also arranged to cause the outer surface of the barrel 18 to soften slightly to the extent that it adheres to the sleeves 16. As mentioned above the barrel 18 and cable 2 are firmly secured together by a friction fit between the passage 28 in barrel 18 and the projecting boss 30 of the cable core 6, and furthermore are permanently secured together by flowed sealing ring 22. Thus the sleeves 16 are firmly fixed in barrel 18 and the barrel 18 is firmly fixed to cable 2. Hence mechanical strain on the optical fibres 10 due to any force acting to bend the barrel 18 relative to the cable end 2, is substantially avoided. Each optical fibre 10 is however free to move within its sleeve 16. This is necessary in order to accommodate any tensile strain on the fibres 10 and also to accommodate any difference in the expansion of the optical fibres 10 and sleeves 16 during thermal cycling of the cable in use.

The assembly of the invention thus provides for termination of a fibre optic cable in a particularly convenient manner. The optical fibres, which are

0092441

exposed on preparation of the cable, are protected immediately and simply by sliding the individual polymeric sleeves along their entire exposed lengths, and can thereafter be handled more conveniently.

It will be appreciated that not only the sleeves employed may be manufactured by extrusion but also that the support member may be extruded. Accordingly, the complexity of manufacture of moulded parts is avoided.

It will be appreciated that the same support member may be used to terminate a range of sizes of fibre optic cable without introducing any substantial change in direction of the fibres at the transition between the cable and the support member. This may be achieved, for example, by varying the wall thickness of the sleeves surrounding respectives ones of the fibres, or by inserting linings in the channels of the support member. Thus it is not necessary to stock and carry a large number of support members of different sizes. For identification purposes, the support members may be marked to provide an indexation of the sleeved fibres, or each of the sleeves surrounding respective ones of the fibres may be imprinted or coloured. If imprinting is desired the material of the sleeves or of the support member must be suitably selected. Printing is possible on Kynar.

In the installed cable termination the ensleeved and environmentally protected optical fibres project from the free end of the support member, and may extend, for example, a further 4 metres before being individually terminated, or connected to a further cable.

CLAIMS:

1.    An assembly suitable for terminating a fibre-optic cable having a plurality of optical fibres extending from an end thereof, the assembly comprising a plurality of polymeric sleeves for positioning around respective individual optical fibres, and a support member having a plurality of channels for receiving and locating sleeved portions of respective optical fibres within the channels, the support member being arranged for mounting at the end of the cable to support the sleeved optical fibres where they extend from the cable.

2.    An assembly according to Claim 1, wherein the support member is so arranged that at least at the transition from the cable to the support member the optical fibres undergo substantially no change in direction.

3.    An assembly according to Claim 1 or 2, wherein the channels are open-sided.

4.    An assembly according to any preceding Claim, wherein the channels form part of the outer surface of the support member.

5.    An assembly according to any preceding Claim, wherein the polymeric sleeves are arranged to be a snap fit in respective ones of the support member channels.

6.    An assembly according to any preceding claim, wherein the support member is arranged to be engaged with the end of the cable and to be secured thereto.

7.    An assembly according to any preceding claim, wherein the sleeves and the support member are made from compatible materials such that they can adhere together to prevent relative movement therebetween.

8.    An assembly according to any preceding claim, wherein the polymeric sleeves are made from crosslinked polymeric material.

9.    An assembly according to any preceding claim, comprising a further polymeric sleeve arranged so as to extend, in use, over at least the transition between the cable end and the support member environmentally to protect the end of the cable.

10.    An assembly according to Claim 9, comprising sealing material for sealing the further polymeric sleeve to the cable and to the support member to provide said environmental protection.

11.    An assembly according to Claim 10, wherein the sealing material is in the form of two rings arranged as inserts within the further polymeric sleeve, one of said rings being arranged to seal the further polymeric member to the cable and the other ring being arranged to seal the further polymeric sleeve to the support member.

12.    An assembly according to Claim 10 or 11, wherein the further polymeric sleeve is heat-shrinkable.

13.  A fibre optic cable having a plurality of optical fibres extending from an end thereof, terminated with an assembly according to any preceding claim.

14.  A terminated cable according to claim 13, wherein the cable comprises an outer protective sleeve that is stripped back to expose the optical fibres mounted on a carrier member of the cable, and wherein the polymeric sleeves are positioned around respective ones of the optical fibres so as to extend along the carrier member up to the stripped-back end of the outer protective sleeve.

15.  A method of terminating a fibre optic cable having a plurality of optical fibres extending from an end thereof, the method comprising positioning a plurality of polymeric sleeves around respective ones of the optical fibres, mounting a support member at the end of the cable, the support member having a plurality of channels and being arranged such that the channels locate and receive sleeved portions of respective ones of the optical fibres and such that the sleeved optical fibres are supported where they extend from the cable.

16.  A method of terminating a fibre optic cable having a plurality of optical fibres extending from the end thereof, wherein the cable is terminated by an assembly according to any one of claims 1 to 12.

Fig.1.

0092441

*Fig. 2.*

*Fig. 3.*

**European Patent Office**

**EUROPEAN SEARCH REPORT**

Application number

EP 83 30 2254

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| P,X | EP-A-0 063 506 (LIGNES TELEGRAPHIQUES ET TELEPHONIQUES) <br><br> * Page 3, line 7 - page 5, line 7; page 6, line 23 - page 9, line 10; figures 1-4 * <br><br> --- | 1,2,6 7,9,12 -16 | G 02 B 5/16 <br> G 02 B 7/26 |
| A | US-A-3 919 037 (C.M. MILLER) <br> * Figure 4; column 2, lines 37-60 * <br><br> --- | 1,4-6 | |
| A | US-A-4 264 129 (R.L. WARKENTINE) <br> * Column 3, line 17 - column 4, line 19; column 4, line 57 - column 5, line 39; figures 1,2 * <br><br> --- | 1,8,15 ,16 | |
| A | GB-A-2 038 015 (STANDARD TELEPHONES AND CABLES LTD.) <br> * Claims 1-3,5,8,9 * <br><br> ----- | 1,8,12 -14 | TECHNICAL FIELDS SEARCHED (Int. Cl. 3) <br><br> G 02 B |

The present search report has been drawn up for all claims

| Place of search | Date of completion of the search | Examiner |
|---|---|---|
| THE HAGUE | 14-07-1983 | MORRELL D.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82